# EUROPEAN PATENT APPLICATION

(11) **EP 4 268 609 A1**
(43) Date of publication of application: **01.11.2023**
(21) Application number: 22170623.7
(22) Date of filing: 28.04.2022
(51) Int. Cl.: A23L 17/60, A23B 7/00

(54) **A METHOD OF PRESERVING SEAWEED**

(71) Applicant: TEAGASC, The Agriculture and Food Development Authority, Carlow R93 XE12 (IE)
(72) Inventor: Healy, Laura, Dublin, 15 (IE); Tiwari, Brijesh, Dublin, 15 (IE); Zhu, Xianglu, Dublin, 15 (IE)
(74) Representative: Purdylucey Intellectual Property

(57) **Abstract**

A method of preserving seaweed comprising blanching the seaweed to kill microorganisms and denature enzymes in the seaweed and storing the blanched seaweed in a container containing a preserving and storage solution comprising both citric acid and a salt in solution to prevent microbial growth in the seaweed over time. The invention also relates to a preserving and storage solution comprising both citric acid and a salt in solution.

## Description

### Field of the Invention

This invention relates to a method of preserving seaweed and to a seaweed preserving and storage solution for storing blanched seaweed.

### Background to the Invention

Harvested seaweed must be subjected to a number of post-harvest processes in order to make the seaweed suitable for consumption. Generally, the post-harvest process currently carried out in the seaweed industry involves washing and grading, followed by solar or hot-air drying prior to further processing. This process is time sensitive because seaweed is perishable due to its high moisture content (80%) so that without immediate processing, seaweed is prone to rotting. Moreover, immediate drying can incur significant immediate costs for producers as it is estimated that the energy cost to dry three tonnes of seaweed is 60 kWh and takes 48 hours giving rise to a drying cost of approximately €600 at current rates.

Accordingly, seaweed producers currently have to dry their seaweed immediately after harvesting in order to ensure preservation of their stock ahead of further processing. This places huge pressure on the industry to process (dry) large amounts of biomass in a short frame of time, as most producers must harvest their seaweed at a critical time point (usually once per season or per year). However, while immediately dried seaweed is rendered stable for further processing or transportation, the requirement for immediate drying is problematical, as solar drying is reliant on constant weather conditions for the harvest season, while hot air drying is expensive, energy consuming and limited by time and space. Moreover, immediate drying demands significant manual labour resources and post-harvest steps to wash, grade and dry the seaweed, in a limited time frame while the harvested seaweed must often be transported to a drying site.

In addition, in many seaweed applications such as ensilage, fermentation, and direct food use wet or undried seaweed is preferred for processing purposes.

It is an object of the invention to overcome at least one of the above-referenced problems.

### Summary of the Invention

According to the invention there is provided a method of preserving seaweed comprising:
blanching the seaweed to kill microorganisms and denature enzymes in the seaweed, and
storing the blanched seaweed in a container containing a preserving and storage solution comprising both an acid and a salt in solution which prevents microbial growth in the seaweed over time.

Preferably, the blanched seaweed is immersed in the preserving and storage solution in the container.

In one embodiment, the blanched seaweed is stored in the preserving and storage solution for an extended period of time from about seven days to about six months.

Preferably, the blanched seaweed is stored in the preserving and storage solution for an extended period of at least two weeks to reduce microbial growth in the seaweed.

In one embodiment, the blanching step is performed at a temperature of from about 77°C to about 83°C. Preferably, the blanching step is performed at a temperature of about 80°C.

In one embodiment, the blanching step is performed for a period of from four minutes to about six minutes. Preferably, the blanching step is performed for a period of about five minutes.

In any embodiment, the acid comprises citric acid.

In a preferred embodiment, the citric acid and salt are present in the solution in a ratio of about 3.88 citric acid : about 2.12 salt.

Advantageously, the preserving and storage solution is an aqueous preserving and storage solution comprising 6% citric acid and salt.

In one embodiment, the method further comprises the step of washing the seaweed prior to blanching the seaweed.

In any embodiment, the method further comprises the step of chopping the seaweed prior to blanching.

In any embodiment, the method further comprises the step of removing the stored seaweed from a container and drying the stored seaweed as required.

In another embodiment, the invention also extends to a seaweed preserving and storage solution for storing blanched seaweed in a container wherein the preserving and storage solution comprises both citric acid and a salt in solution.

In one embodiment, the citric acid and salt are present in the solution in a ratio of about 3.88 citric acid : about 2.12 salt. Preferably, the preserving and storage solution is an aqueous solution comprising 6% citric acid and salt.

In another embodiment, the invention extends to a method of processing seaweed comprising
blanching the seaweed to kill microorganisms and denature enzymes in the seaweed,
storing the blanched seaweed in a container containing a preserving and storage solution comprising both an acid and a salt in solution to prevents microbial growth in the seaweed over time, and
drying the stored seaweed as required for further use.

In another embodiment, the invention extends to a method of reducing microbial growth in stored seaweed comprising:
blanching the seaweed to kill microorganisms and denature enzymes in the seaweed, and
storing, for an extended period, the blanched seaweed in a container containing a preserving and storage solution comprising both an acid and a salt in solution to reduce microbial growth in the seaweed over the extended period.

Preferably, the extended period comprises a period of at least about two weeks.

In one embodiment, the blanching step is performed at a temperature of about 80°C. Preferably, the blanching step is performed for a period of about five minutes.

In any embodiment, the acid comprises citric acid.

In a preferred embodiment, the citric acid and salt are present in the solution in a ratio of about 3.88 citric acid : about 2.12 salt.

Advantageously, the preserving and storage solution is an aqueous preserving and storage solution comprising 6% citric acid and salt.

The present invention provides an improved method of preserving seaweed and more particularly a significantly improved method of extending the shelf-life of fresh seaweed. Moreover, surprisingly, decreased or reduced TVC's are observed over time in seaweed stored for extended periods in a preserving and storage solution in accordance with the method of the invention. The invention therefore obviates the need for immediate vegetable/seaweed drying by allowing seaweed producers to stagger the post-harvest drying step, if desired, thereby allowing more time to process the large quantities of seaweed harvested at the one time. In addition, longer shelf-life fresh seaweed affords seaweed producers more options for further processing of the fresh seaweeds into end products. The method of the invention only requires containers for storage and the selected chemicals for preservation. There is no intensive labour required or high equipment cost incurred.

Furthermore, the chemicals employed in the preserving and storage solution of the invention are cheap and environmentally friendly ingredients. The invention provides the seaweed industry in particular with an innovative cost effective solution to extend the shelf-life of freshly harvested seaweed and keeps the seaweed fresh whilst awaiting further processing such as salting, drying, milling, fermentation or ensiling. Moreover, where a drying step is required to be performed on the stored seaweed, the blanching and extended storage steps allow for an accelerated seaweed drying process.

Compared with existing similar technology employed in the seaweed industry such as (immediate) solar drying and hot air drying to preserve the seaweed, the method of the invention significantly reduces energy consumption and labour, and significantly extends seaweed shelf life. In addition, the method of the invention allows seaweed producers to have a better organized timetable during the harvest season (e.g. to stagger drying) and provides more options for developing potential end products resulting in a significant positive economic impact on the seaweed processing industry.

In addition, the colour of seaweed treated in accordance with the invention after long-term storage is not compromised so that the appearance of stored seaweed is still acceptable to consumers.

The invention is suitable for use with all seaweed types such as wild harvested seaweed, normal cultivation seaweed and organic cultivation seaweed.

In summary, the present invention minimises post-harvest steps, reduces post-harvest labour requirements, reduces time pressures on producers by facilitating seaweed drying on demand post-harvest, has zero oven-drying energy costs where no drying is required, has low material costs due to the use of inexpensive preserving and storage solution ingredient costs, maintains the colour acceptability of seaweed and eliminates transportation costs where the seaweed is stored onsite.

### Definitions

In the following description, the following definitions apply:
Blanching: Immersing the seaweed in hot water for a set period of time;
Preserving and storage solution: A liquid solution containing solutes and solvents in a set ratio that creates a preservation medium that prevents, inhibits and/or reduces microbial growth over time, in which seaweed can be stored;
Solvent: A substance that dissolves a solute, creating a solution, and
Total Viable Count (TVC): A tool employed to quantify the population of microbes in a sample and is a key measurement for shelf-life analysis.

### Detailed Description of the Invention

The method of the invention employs a two-step process to effectively extend the shelf life of fresh seaweed. The two-step process is made up of a first step in which the seaweed is subjected to a blanching treatment and a second step in which the blanched seaweed is stored in a novel preserving and storage solution in a storage container for a prolonged or extended period for up to about 26 weeks or more. Accordingly, the method of the invention obviates the need for immediate drying of fresh seaweed to allow producers store fresh seaweed stock immediately after harvesting the seaweed. The producer can then dry the stored and preserved fresh seaweed stock as required by removing a desired amount of fresh seaweed from the preserving storage containers. The fresh seaweed is therefore available for on-demand drying or further processing as required.

The seaweed employed in the method of the invention can be harvested from the sea in a conventional manner and is washed to remove any debris (such as sand, shells etc.). The fresh washed seaweed is then subjected to the blanching step by immersing the washed seaweed in hot water in a blanching vessel for a set period of time. The blanching step kills any microorganisms present and denatures enzymes in the seaweed (thereby halting natural degradation). This step therefore essentially sterilises the seaweed. In general, a blanching water temperature below boiling is employed and a temperature of about 80°C is preferred while a blanching period of about 5 minutes is considered optimal. Blanching the seaweed at these parameters ensures that the TVC of the seaweed is sufficiently reduced whilst at the same time minimising seaweed colour changes and reductions. By blanching at a temperature below boiling, the energy required for the method of the invention is minimised.

The blanched fresh seaweed is then immersed and stored in a preserving and storage solution, generally an aqueous preserving and storage solution, in storage containers by removing the seaweed from the blanching vessel and transferring the blanched seaweed to the storage containers. It is not necessary to drain or cool/refresh the blanched seaweed before soaking/immersion in the preserving and storage solution. The preserving and storage solution prevents, inhibits and/or reduces microbial growth over time.

The preserving and storage solution contains preserving agents in the form of solutes/solvents at a set ratio while a preferred aqueous preserving and storage solution is made up of a combination of an acid and a salt in solution in water. Citric acid is a particularly preferred acid for use in the method of the invention in combination with a salt in the form of sodium chloride although alternative salts may be suitable. An aqueous preserving and storage solution having a ratio of about 3.88 citric acid : 2.12 salt is a particularly effective at preserving the seaweed for prolonged periods. This combination of citric acid and salt was found to be most effective when added as 6% of the total soaking solution (the remaining being water).

The seaweed can be stored in the storage containers until required for up to about six months or more which is an exceptional shelf-life extension for fresh seaweed.

The invention will now be described having regard to the following non-limiting examples.

### Example 1

Fresh *Alaria Esculenta* was harvested from Co. Mayo, Ireland, in March 2020, and then washed and chopped (the chopping step being optional depending on the end use envisaged for the seaweed). The seaweed was subjected to blanching and soaking/storing to extend the shelf life of the fresh seaweed as indicated below to demonstrate the effectiveness of the blanching step. Blanched and unblanched samples were soaked/immersed in containers in a preserving and storage solution containing 3g of salt and 3g of citric acid made up to 100ml.. Prior to use, the storage containers were rinsed with tap water to remove any potential contaminants. Alternatively, the storage containers can be sterilised if desired. The experiment was carried out with three replicates in order to reduce deviation.

*Method*: 10g of seaweed was employed and the effect of blanching was investigated by preparing samples that were blanched and samples that were not blanched. Samples were stored for 1, 2, 3 and 4 week storage times in an incubator at room temperature. Control samples were also tested and contained no preserving solvents (just water). The TVC was then assessed and the results are shown in Table 1 below.

**Table 1**

| Total viable count (TVC) of 7-dav and 14-day storage time of *Alaria Esculenta* | | | | |
|---|---|---|---|---|
| **Treatment** | **TVC-7 days (log cfu/g)** | **STDEV** | **TVC-14 days (log cfu/g)** | **STDEV** |
| Blanched | 3.73 | 0.33 | 5.26 | 0.98 |
| Unblanched | 4.55 | 0.84 | 5.94 | 1.71 |

| | | | | |
|---|---|---|---|---|
| All data is the mean of three replicates (n = 3) Control with water instead of preserving and storage solution had a TVC-7days of 5.57 | | | | |

As shown in Table 1, blanching together with the preserving and storage solution had a significant reduction effect on the TVC of the samples.

### Example 2

The method of the invention employing a 6% citric acid and salt preserving and storage solution containing a ratio of about 3.88 citric acid : 2.12 salt was performed on 20g seaweed samples were blanched as per Example 1 and soaked in the preserving and storage solution by immersing the blanched seaweed in the preserving and storage solution as per Example 1. Blanched and unblanched samples were tested. Storage time was set up to 26 weeks. TVC's and colour values were also assessed.

The results are presented in Table 2 below:

**Table 2**

| Total Viable Counts and Colour Values | | | | |
|---|---|---|---|---|
| | **L*** | **a*** | **b*** | **TVC (log cfu/g)** |
| Unblanched fresh | 28.34 ± 0.74 | 0.14 ± 0.09 | 1.80 ± 0.32 | 3.42 ± 0.66 |
| Blanched Fresh | 17.36 ± 2.85 | -1.00 ± 0.85 | 4.62 ± 2.51 | 2.57 ± 0.47 |
| 1-week blanched | 32.41 ± 2.05 | -0.71 ± 0.51 | 4.02 ± 0.77 | 3.42 ± 0.55 |
| 1-week unblanched | 31.84 ± 1.77 | -0.39 ± 0.18 | 3.53 ± 0.54 | 2.52 ± 0.81 |
| 2-week blanched | 33.22 ± 0.81 | 0.78 ± 0.44 | 4.19 ± 0.72 | 1.36 ± 0.47 |
| 2-week unblanched | 31.54 ± 2.07 | -0.59 ± 0.47 | 4.60 ± 1.84 | 1.70 ± 0.36 |
| 4-week blanched | 34.36 ± 2.39 | -0.63 ± 0.32 | 4.23 ± 1.12 | 0.66 ± 0.33 |
| 4-week unblanched | 31.88 ± 2.24 | -0.55 ± 0.29 | 3.79 ± 0.77 | 1.36 ± 0.13 |
| 10-week blanched | 33.37 ± 1.96 | -0.74 ± 0.53 | 4.10 ± 0.81 | 0.96 ± 0.08 |
| 10-week unblanched | 31.24 ± 1.45 | -0.33 ± 0.21 | 3.44 ± 0.47 | 2.19 ± 0.62 |
| 26-week blanched | 30.25 ± 1.16 | -0.47 ± 0.26 | 3.12 ± 0.52 | N.D. |
| 26-week unblanched | 32.14 ± 2.45 | -0.46 ± 0.18 | 3.78 ± 1.54 | N.D. |

| | | | | |
|---|---|---|---|---|
| N.D: not detected; For colour values, L* indicates lightness, a* represents redness and greenness and b* describes blueness and yellowness; all data is the mean of three replicates (n = 3) | | | | |

As shown in the Table, TVCs were maintained at safe levels throughout and surprisingly were shown to be reducing from week two onwards. Accordingly, the method and preserving/storage solution of the invention had an extended impact on controlling microbial populations. At 26 weeks, no microbial population was detected. As a result, the TVC of fresh seaweed treated with the blanching and soaking method of the invention can comply with international safe food standards such as European Commission Regulation No. 2073/2005 relating to fresh-cut ready to eat vegetables which requires that the E. coli content in pre-cut fruit and vegetables should be below 3 log cfu/g.

Table 2 also demonstrates that the method and preserving and storage solution of the invention can effectively control the microbial growth in seaweed samples for six months and possibly longer.

Colour of the seaweed after processing is one of the most important parameters to be considered by food manufactures when developing an end product containing seaweed (e.g. seaweed bread, seaweed cookie, etc.) to be accepted by the consumer. As shown in the Table, in general, the colour of seaweed samples after a long time soaking process turned darker, less greenish and more yellowish with the result that the appearance of seaweed treated in accordance with the invention after long-term storage was still acceptable to consumer

## Claims

1. A method of processing seaweed comprising:
blanching the seaweed to kill microorganisms and denature enzymes in the seaweed, and
storing the blanched seaweed in a container containing a preserving and storage solution comprising both an acid and a salt in solution which prevents microbial growth in the seaweed over time.

2. A method as claimed in Claim 1 wherein the blanched seaweed is immersed in the preserving and storage solution in the container.

3. A method as claimed in Claim 1 or Claim 2 wherein the blanched seaweed is stored in the preserving and storage solution for an extended period of time from about seven days to about six months.

4. A method as claimed in any of Claims 1 to 3 wherein the blanched seaweed is stored in the preserving and storage solution for an extended period of at least two weeks to reduce microbial growth in the seaweed.

5. A method as claimed in any of Claims 1 to 4 wherein the blanching step is performed at a temperature of from about 77°C to about 83°C and preferably at a temperature of about 80°C.

6. A method as claimed in Claim 5 wherein the blanching step is performed for a period of from about four to about six minutes and preferably for a period of about five minutes.

7. A method as claimed in any of Claims 1 to 6 wherein the acid comprises citric acid.

8. A method as claimed in Claim 7 wherein the citric acid and salt are present in the solution in a ratio of about 3.88 citric acid : about 2.12 salt.

9. A method as claimed in Claim 8 wherein the preserving and storage solution is an aqueous preserving and storage solution comprising 6% citric acid and salt.

10. A method as claimed in any of Claims 1 to 9 further comprising the step of washing the seaweed prior to blanching the seaweed.

11. A method as claimed in any of Claims 1 to 10 further comprising the step of chopping the seaweed prior to blanching.

12. A method as claimed in any of Claims 1 to 11 further comprising the step of removing the stored seaweed from a container and drying the stored seaweed as required.

13. A seaweed preserving and storage solution for storing blanched seaweed in a container wherein the preserving and storage solution comprises both citric acid and a salt in solution.

14. A seaweed preserving and storage solution as claimed in Claim 13 wherein the citric acid and salt are present in the solution in a ratio of about 3.88 citric acid : about 2.12 salt.

15. A seaweed preserving and storage solution as claimed in Claim 14 wherein the preserving and storage solution is an aqueous solution comprising 6% citric acid and salt.
